# EUROPEAN PATENT APPLICATION

(11) **EP 3 113 098 A1**
(43) Date of publication of application: **04.01.2017**
(21) Application number: 15306083.5
(22) Date of filing: 02.07.2015
(51) Int. Cl.: G06Q 20/38

(54) **METHOD, DEVICE AND BACK-END SYSTEM FOR AUTHORIZING A TRANSACTION**

(71) Applicant: GEMALTO SA, 92190 Meudon (FR)
(72) Inventor: HUGOT, Didier, 13881 GEMENOS Cedex (FR)
(74) Representative: Scheer, Luc

(57) **Abstract**

The invention relates to a method 30 for authorizing data transaction.

According to the invention, the method comprises the following steps. A device 12 generates a transaction cryptogram by using a first predetermined algorithm, at least one payment transaction key and at least one predetermined data item. A value of at least one of the at least one predetermined data item changes from a first to a second transaction. The device extracts, from the transaction cryptogram, by using a predetermined reduction scheme, a predetermined number of at least one unit of information, the at least one extracted information unit forming a reduced cryptogram. The device generates 38 a first restricted use account number based upon at least the reduced cryptogram and a bank issuer identifier. The device or another device sends to a first server 18 a first message 39 including at least one piece of user account information accompanied with the first restricted use account number. The first server sends to a back-end system a second message 310 including a request for authorizing a transaction accompanied with the at least one piece of user account information and the first restricted use account number. The back-end system retrieves, based upon at least part of the at least one piece of user account information, at least one piece of user account information. The back-end system generates 312 a second restricted use account number by using the first predetermined algorithm and the predetermined reduction scheme, the bank issuer identifier and at least part of the at least one retrieved piece of user account information. The back-end system compares 314 the second restricted use account number to the first restricted use account number. Only if the second restricted use account number matches the first restricted use account number, the back-end system retrieves, based upon at least part of the at least one retrieved piece of user account information, at least one piece of user account information. And the back-end system or another entity sends to the first server a third message including, as request response, a transaction authorization.

The invention also relates to corresponding device 12 and back-end system.

## Description

### Field of the invention:

The invention relates generally to a method for authorizing a transaction.

Furthermore, the invention also pertains to a device for authorizing a transaction.

Lastly, the invention relates to a back-end system for authorizing a transaction as well.

### State of the art:

As known per se, a user of a bank card reads a Primary Account Number (or PAN), a Card Verification Value (or CVV) and an Expiration Date (or ED), as card data printed on the bank card. Then, the user provides a merchant web site with read data, so as to perform an on-line payment transaction. A Point Of Sale (or POS) terminal reads, from a magnetic stripe of a bank card, card data and sends it, through a merchant infrastructure, to a bank (card) issuer system, so as to perform a payment transaction on site, like in a shop. The PAN allows identifying a bank account of the bank card user. The CVV and the ED are used for securing the payment transaction.

However, such known solutions are not secured enough notably due to an easy access to the card data. The known solutions are therefore particularly sensitive to fraud.

Thus, there is a need to provide a solution that allows better securing a payment transaction without modifying the merchant infrastructure.

### Summary of the invention:

The invention proposes a solution for satisfying the just herein above specified need by providing a method for authorizing a transaction.

According to the invention, the method comprises the following steps. A device generates a transaction cryptogram by using a first predetermined algorithm, at least one payment transaction key and at least one predetermined data item. A value of at least one of the at least one predetermined data item changes from a first to a second transaction. The device extracts, from the transaction cryptogram, by using a predetermined reduction scheme, a predetermined number of at least one unit of information, the at least one extracted information unit forming a reduced cryptogram. The device generates a first restricted use account number based upon at least the reduced cryptogram and a bank issuer identifier. The device or another device sends to a first server a first message including at least one piece of user account information accompanied with the first restricted use account number. The first server sends to a back-end system a second message including a request for authorizing a transaction accompanied with the at least one piece of user account information and the first restricted use account number. The back-end system retrieves, based upon at least part of the at least one piece of user account information, at least one piece of user account information. The back-end system generates a second restricted use account number by using the first predetermined algorithm and the predetermined reduction scheme, the bank issuer identifier and at least part of the at least one retrieved piece of user account information. The back-end system compares the second restricted use account number to the first restricted use account number. Only if the second restricted use account number matches the first restricted use account number, the back-end system retrieves, based upon at least part of the at least one retrieved piece of user account information, at least one piece of user account information. And the back-end system or another entity sends to the first server a third message including, as request response, a transaction authorization. The principle of the invention consists in that a (client) device computes a (transaction) cryptogram with a first predefined algorithm, a payment transaction key and one or several predetermined data items. The value of at least one predetermined data item changes from a transaction to another transaction. The device gets, according to a reduction scheme, a predefined number of one or several information units of the cryptogram, as a reduced cryptogram. The device computes a first restricted use account number based on the reduced cryptogram and a bank issuer identifier. A first server receives from the (or another) device a first message comprising one or several user account information pieces along with the first restricted use account number. The first server sends to a back-end system a second message comprising a request for authorizing a transaction along with one or several user account information pieces and the first restricted use account number. The back-end system retrieves, based on at least part of the piece(s) of user account information, one or several piece(s) of user account information. The back-end system computes a second restricted use account number by using the first algorithm, the reduction scheme, a bank issuer identifier and at least part of the retrieved user account information pieces. Then, the back-end system compares the second to the first restricted use account number. In case of identical matching, the back-end system fetches, thanks to at least part of the retrieved user account information pieces, at least one or several user account information pieces. Then, the back-end system or another entity sends to the first server a third message comprising a transaction authorization.

Such an invention (payment transaction) solution is therefore based on a use of a restricted use account number that is generated from a reduced cryptogram which is dependent on a predetermined data item(s). Thus, the restricted use account number is unique and a value of the restricted use account number changes from a transaction to another transaction due to a change of the value of at least one predetermined data item. The restricted use account number is issued by a (client) device and verified by a back-end system, in order to authorize (or not) a corresponding payment transaction.

The invention solution is more secure than a PAN based solution since, contrary to such a static PAN, the used restricted use account number is cryptographically and dynamically computed. Furthermore, the used restricted use account number is dependent on the concerned predetermined data item(s) and therefore changes from a first to a second transaction.

Thus, once used for a transaction, the restricted use account number can not be re-used for another transaction due to a change of its value between the two transactions.

It is noteworthy that a corresponding transaction application supported by the device that allows carrying out the invention method at the client side may be based on any type, like e.g. an Europay Mastercard Visa (or EMV) application or the like.

It is to be noted that at least part of the received user account information pieces may be a (digital) token, like e.g. a so-termed Dynamic PAN (or DPAN), to get at least one or several user account information pieces, like e.g. a PAN. In other words, the back-end system may carry out a de-tokenization based on a received token, according to such an implementation.

The predetermined data item(s), the value of which changes from a first to a second transaction, includes preferably a counter, like e.g. an Application Transaction Counter.

The invention solution leverages on an existing merchant (or retailer) server, as a first server.

The invention solution also leverages on an existing back-end system infrastructure.

As the invention solution re-uses the existing back-end system infrastructure, the invention solution is simple and easy to implement.

The invention method may be automatically implemented.

Thus, a user of the device at the client side that implements the invention method does not need to be involved to allow carrying out a payment transaction. The invention method is therefore convenient for the user.

The device may generate a transaction cryptogram by using, besides the first algorithm and one or several data items, a Personal Identity Number (or PIN) and/or other user authentication data, like e.g. user biometric data. According to such a more secure embodiment, corresponding reference user authentication data is stored only at the back-end system side, so as to generate a second restricted use account number to be matched.

The invention method is notably applicable for a proximity payment transaction or an on-line payment transaction, by using a terminal, like e.g. a mobile phone or a Personal Computer (or PC), or a Secure Element (or SE), as a device.

According to a further aspect, the invention is a device for authorizing a transaction.

According to the invention, the device is configured to generate a transaction cryptogram by using a first predetermined algorithm, a payment transaction key and at least one predetermined data item. A value of at least one of the at least one predetermined data item changes from a first to a second transaction. The device is configured to extract, from the transaction cryptogram, by using a predetermined reduction scheme, a predetermined number M of at least one unit of information, the at least one extracted information unit forming a reduced cryptogram. The device is configured to generate a first restricted use account number based upon at least the reduced cryptogram and a bank issuer identifier. The device is configured to send a first message including at least one piece of user account information accompanied with the first restricted use account number.

The device may be a (user) terminal, an embedded chip or a smart card, as an SE.

Within the present description, an SE is a smart object or device that includes a chip that protects, as a tamper resistant component, physically access to stored data and is intended to communicate, preferably in a secure manner, data with the outside world.

The SE chip may be fixed to or removable from the device.

The invention is notably applicable to a mobile radio-communication field wherein the device is a mobile terminal or a chip that may be embedded, such as an embedded Universal Integrated Circuit Card (or eUICC) within a host device, or removable from a host device, like e.g. a chip included within a smart card termed Subscriber Identity Module (or SIM) type card or the like, as an SE.

The invention does not impose any constraint as to a kind of the SE type.

As a removable SE, it may be a SIM type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled or connected to a chip host device.

As to the chip host device, it may be constituted by any electronic device comprising data processing means, data storing means and one or several Input/Output (or I/O) communication interfaces, like e.g. a user terminal or a terminal.

According to a further aspect, the invention is a back-end system for authorizing a transaction.

According to the invention, the back-end system is configured to receive a second message including a request for authorizing a transaction accompanied with at least one piece of user account information and a first restricted use account number. The back-end system is configured to retrieve, based upon at least part of the at least one received piece of user account information, at least one piece of user account information. The back-end system is configured to generate a second restricted use account number by using a first predetermined algorithm and a predetermined reduction scheme, a bank issuer identifier and at least part of the at least one retrieved piece of user account information. The back-end system is configured to compare the second restricted use account number to the first restricted use account number. The back-end system is configured to retrieve, only if the second restricted use account number matches the first restricted use account number, based upon at least part of the at least one retrieved piece of user account information, at least one piece of user account information. The back-end system is configured to send a third message including, as request response, a transaction authorization.

### Brief description of the drawings:

Additional features and advantages of the invention will be more clearly understandable after reading a detailed description of one preferred embodiment of the invention, given as one indicative and non-limitative example, in conjunction with the following drawings:

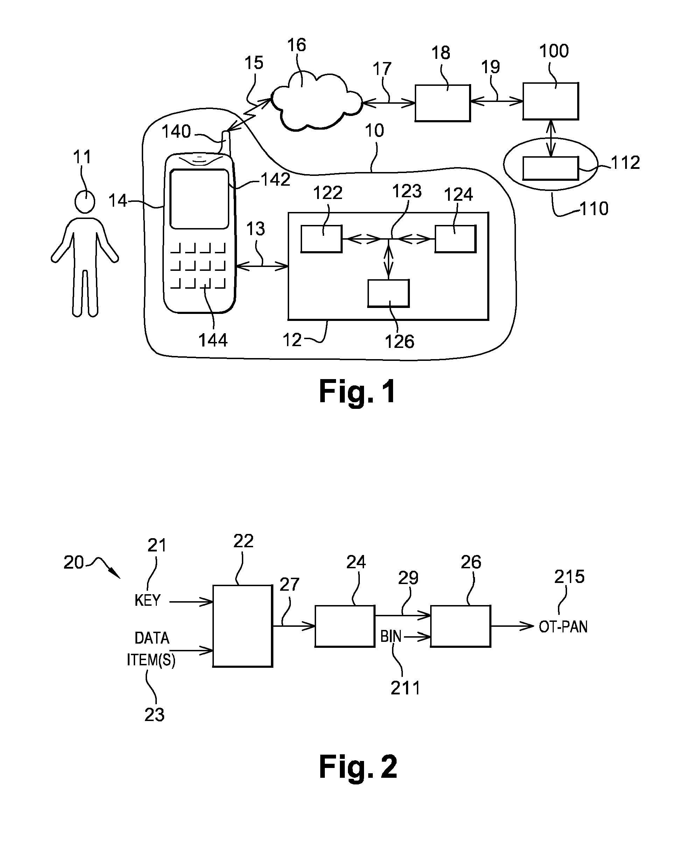

- Figure 1 is a simplified diagram of a mobile terminal equipment comprising a phone and a chip being arranged to issue at least an OT-PAN, via a first server, to a second server that verifies whether the OT-PAN is valid at a back-end system side, so as to authorize a payment transaction, according to the invention;
- Figure 2 represents a simplified scheme for generating, both at a client side and at a back-end system side of figure 1, an OT-PAN by using an ARQC generation algorithm, an ARQC reduction algorithm, an information unit concatenation algorithm and a data item(s) that change(s) its(their) value from a first to a second transaction; and

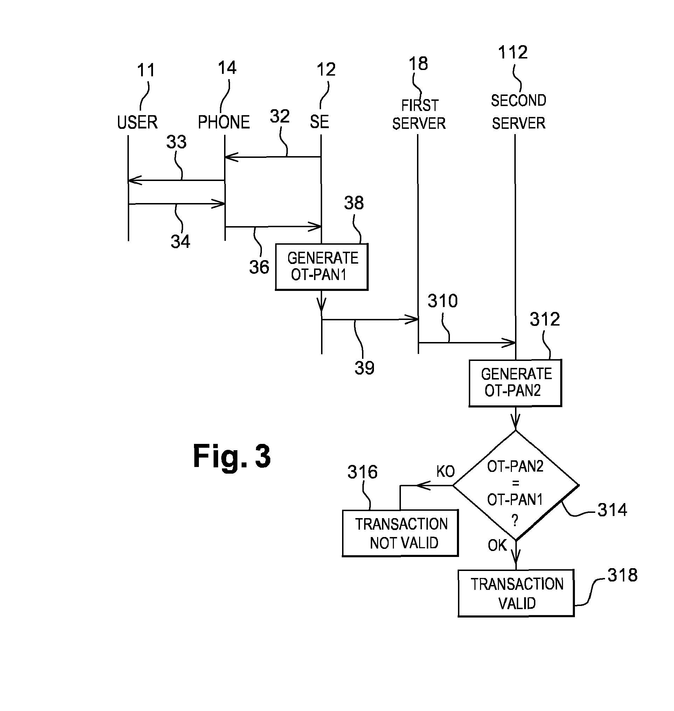

- Figure 3 illustrates a simplified example of a flow of messages exchanged between notably a user, the phone, the chip, the first and the second server of figure 1, so that the chip generates at least the OT-PAN and sends it, in order to be validated at the back-end system side that generates a reference OT-PAN to be matched by using, like the chip, the figure 2 scheme.

### Detailed description:

Herein under is considered an embodiment in which the invention method for authorizing a transaction that is implemented notably by an eUICC, as an SE and a chip soldered (possibly in a removable manner) on a Printed Circuit Board (or PCB) of a host terminal, at a client side.

The chip may also incorporate at least part of the host terminal component(s), like e.g. a baseband processor, an application processor and/or other electronic component(s).

Alternately, instead of an eUICC, the chip may be a Trusted Execution Environment (or TEE), as an SE and a secure area of a terminal processor and a secured runtime environment.

The SE may have different form factors.

Instead of being embedded within its host device, the chip may be carried by a medium, such as a smart card or a dongle, like e.g. a USB type dongle.

According to another embodiment (not represented), the invention method for authorizing a transaction is implemented by a device, as a standalone entity, at a client side. In other words, the device, like e.g. a mobile terminal, does not cooperate with any SE, so as to issue notably a first restricted use account number. According to such an embodiment (not represented), the device is adapted to carry out the functions that are described infra and that are carried out by the SE and its host terminal. Thus, a mobile phone may support an invention payment transaction application that is stored in a non-trusted environment.

Naturally, the herein below described embodiment is only for exemplifying purposes and is not considered to reduce the scope of the invention.

**Figure 1** shows schematically, at a client side, a Terminal Equipment (or TE) 10, a mobile network 16, a first remote server 18 and, at a back-end system 110 side, a second remote server 112.

The TE 10 includes a chip 12 and a mobile phone 14, as a (user) terminal and a chip host device.

For the sake of simplicity, the chip 12, the mobile phone 14, the mobile network 16, the first remote server 18 and the second remote server 112 are termed infra the SE 12, the phone 14, the network 16, the first server 18 and the second server 112 respectively.

A TE user 11 is able to carry out an on-line (payment) transaction with the first server 18, as a merchant server, by using her or his phone 14 to communicate with a (payment transaction) acquirer (bank) system or infrastructure 100, based on a so-termed Card Not Present (or CNP) payment transaction. The on-line transaction is a transaction between the SE 12 user and the first server 18 and relates to a so-termed e-commerce (i.e. Over The Internet (or OTI)) or a mobile commerce (i.e. Over The Air (or OTA)) with a merchant.

According to another embodiment (not represented), the phone is able to cooperate locally, e.g. within a store or a shop, with a POS type terminal (not represented) by using a Short Range (or SR) Radio-Frequency (or RF) link, as a Contact-Less (or CL) channel, so as to carry out a proximity (payment) transaction. The POS type terminal is connected to a (payment transaction) issuer (bank) infrastructure, as the back-end system 110. The SR RF link frequency may be fixed at, for instance 13,56 MHz, like e.g. with a Near Field Communication (or NFC) type technology (up to 20 cm between the phone and the POS type terminal) or the like (such as Bluetooth (registered Trademark), Bluetooth Low Energy (registered Trademark), and/or Zigbee (registered Trademark)). Alternatively, instead of a chip 12 incorporated within the phone 14, the chip is carried by a plastic type card (not represented) or another medium, as a standalone device, that is intended to cooperate, through either a CL or a contact channel, with a POS type terminal (not represented) to carry out a proximity transaction with a merchant.

The TE 10 is under a radio coverage of the network 16.

The user terminal, the terminal or a machine in a Machine to Machine (or M2M) context, as a terminal, may be either fixed (i.e. not mobile) or mobile.

The terminal may be a Personal Digital Assistant (or PDA), a vehicle, a set-top box, a tablet computer, a desktop computer, a laptop computer, a PC, a video player, an audio player, a portable TeleVision (or TV), a media-player, a game console, a netbook, an electronic mobile equipment or a device accessory (like e.g. glasses, a watch or a jewel).

Instead of a phone, the terminal may be any other computer device comprising means for processing data, comprising (or being connected to) wireless communication means for exchanging data with outside and comprising (or being connected to) means for storing data.

The TE user 11 benefits preferably from one or several subscriptions to access the network 16.

The phone 14 is able to use one or several Long Range (or LR) Radio-Frequency (or RF) links 15 for accessing, OTA, through an antenna 140, one or several mobile (radio-communication) networks 16.

The LR RF may be fixed at several hundreds of MHz, for instance, around 850, 900, 1800, 1900 and/or 2100 MHz.

According to another embodiment (not represented), instead of using a mobile network(s), the terminal is connected OTI to the first server 18.

The mobile networks, as cellular communication networks, may be constituted by a Global System for Mobile Communications (or GSM), a General Packet Radio Service (or GPRS), a Universal Mobile Telecommunications System (or UMTS), an EDGE (acronym for "Enhanced Data Rates for GSM Evolution"), a Code Division Multiple Access (or CDMA) and/or a Long Term Evolution (or LTE) type network(s).

Such a cellular communication network set is not exhaustive but only for exemplifying purposes.

The phone 14 comprises a (micro)processor(s), as means for processing data, comprising (or being connected to) wireless communication means for exchanging data with outside and comprising (or being connected to) a memory, as means for storing data.

The phone memory may comprise one or several memories including one or several volatile memories and one or several non-volatile memories.

The phone memory may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The phone memory stores an Operating System (or OS) and one or several applications.

The phone 14 includes a display screen 142 and a keyboard 144, as a phone Man Machine Interface (or MMI).

Alternatively, instead of a physical keyboard separated from the display screen, the phone 14 is equipped with a touch sensitive display screen, as virtual keyboard.

The phone MMI may allow the user 11 present data to be sent to the SE 12, the first 18 and/or the second 112 server.

The phone I/O interface with the SE 12 may be an International Organization for Standardization (or ISO) 7816 or USB type interface, as a contact interface, when the SE 12 is inserted, in a removable manner, in the phone 14.

Alternately, instead of a contact interface, the phone I/O interface with the SE 12 is connected to or includes a contact-less interface. The phone 14 is connected to or includes means for communicating data while using preferably an SR RF link. The SR RF link may be related to any technology that allows the phone 14 to exchange data, through a contact-less link, with the SE 12.

The phone 14 is connected, through a bi-directional link 13, to the SE 12.

The SE 12 is mainly under a control of the user 11 and/or the phone 14 at the client side.

The SE 12 is preferably associated with or tied to a network authentication server (not represented). The network authentication server is included within (or connected to) the network 16.

The SE 12 belongs to the user 11, as a subscriber to a wireless (or mobile) service(s).

The SE 12 includes a (micro)processor(s) 122, as data processing means, a memory(ies) 124, as data storing means, and one or several I/O interfaces 126 that are internally all connected, through an internal bidirectional data bus 123, to each other.

The I/O interface(s) 126 allow(s) communicating data from the internal SE 12 components to the chip exterior and conversely.

The memory 124 may store data relating to a Uniform Resource Identifier(s) (or URI), a Uniform Resource Locator(s) (or URL) and/or an Internet Protocol (or IP) address(es) of an external entity(ies) to be addressed, like e.g. the first server 18.

The memory 124 stores an OS.

The memory 124 stores preferably one or several SIM type applications.

The SIM type application(s) allow(s) the phone user 11 to identify and authenticate to at least the network 16.

The memory 124 stores, preferably in a secure manner, one or several sets of data. Each set of data relates to a subscription, as a wireless service(s). Among the subscription data sets, there is or are one or several subscription data sets relating to the network 16.

Each subscription data set is identified by an associated International Mobile Subscriber Identity (or IMSI), as a subscription identifier.

Each subscription data set relates to a Mobile Network Operator (or MNO) or a Mobile Virtual Network Operator (or MVNO), as a (mobile) network 16 operator.

Each set of data relating to one subscription includes an IMSI, as a subscriber and a (service) subscription identifier for accessing a mobile network and preferably an associated key Ki, as a network authentication key, allowing to authenticate the subscriber to the concerned network 16.

The processor 122 processes, controls and communicates internally data with all the other components incorporated within the SE 12 and, through the I/O interface(s) 126, with the chip exterior.

The processor 122 executes or runs several applications.

The processor 122 is preferably able to initiate an action(s), in order to interact directly with the outside world, in an independent manner of the phone 14. Such a capacity of interaction at the initiative of the SE 12 is also known as being a proactive capacity in which the SE 12 plays a role of a master while the SE host device plays a role of a slave. According to one preferred embodiment, the SE 12 is able to use SIM ToolKit (or STK) type commands, as proactive commands.

The SE 12 may be able to send, on its (own) initiative, either through or to the phone 14 (or any other device connected to the SE host device, like e.g. the first server 18), a message by using a proactive command, like e.g. a "SEND SHORT MESSAGE", to send a Short Message Service (or SMS) type message. Such a proactive command allows sending, through the phone 14, to the first server 18 a message including a card type, a card holder name, as one or several pieces of user account information, card data accompanied with data on-board generated. Such an SMS type message (or the like) conveys notably the data generated on-board.

Among the supported applications, the memory 124 stores an invention (payment transaction) application that uses one or several predetermined data items, the value of at least one data item changing from a transaction to another transaction, a predetermined payment transaction key, and possibly other data, as input data to a predetermined payment transaction algorithm.

According to a preferred embodiment, the predetermined payment transaction algorithm includes one or several cryptography algorithms, as a first algorithm, relating to e.g. an EMV (or the like) type application. The first algorithm allows generating preferably an Authorization ReQuest Cryptogram (or ARQC), as a payment transaction cryptogram and a kind of (digital) signature of the concerned transaction. The payment transaction algorithm allows generating, based notably on a reduced ARQC, according to an essential invention feature, a One-Time Primary Account Number (or OT-PAN), as a first restricted use account number. The payment transaction algorithm is shared between the SE 12 and the second server 112, as an OT-PAN verifier, at the back-end system side.

The invention application may be protected by user authentication data, like e.g. a Personal Identification Number (or PIN) and/or biometric data relating to an authorized user, and/or user credentials, like e.g. a password, to be entered or submitted by the user. The user authentication data and/or the user credentials is(are) verified locally and/or remotely. The SE 12, as a local verifier, stores or accesses corresponding reference user authentication data and/or reference user credentials to be matched by data entered or submitted by the user at the client side. The SE 12 compares the received data entered or submitted by the user to the reference user authentication data and/or the reference user credentials. If the received data does not match the reference user authentication data and/or the reference user credentials, then the SE 12 does not authorize to further execute the concerned invention application and thus aborts its execution. Otherwise, i.e. only in case of identical matching, the SE 12 authorizes to further execute the invention application.

Alternatively, instead of storing securely the invention application within the SE 12, the phone 14 stores the invention application. The invention application uses preferably a tokenization mechanism by using e.g. a DPAN, as a token.

The (invention) payment transaction algorithm that allows generating an ARQC and, based on a reduced ARQC, an OT-PAN is further explained in relation with figure 2.

The invention application supported at the client side allows generating, besides the OT-PAN, for the transaction, preferably an associated One-Time Card Verification Value (or OT-CVV), as a piece of restricted use information and a security code, by using a predetermined security code generation algorithm, as a second algorithm. The second algorithm is shared between the SE 12 and the second server 112, as an OT-CVV verifier. The second algorithm may be e.g. a pseudo-random generation algorithm that uses predetermined data, as input data, like e.g. a fixed number value, such as a CVV, that is also shared with the second server 112. The OT-CVV allows further securing the use of the corresponding first restricted use account number. The OT-CVV is to be submitted to the back-end system 110 that uses the same second algorithm and/or the same (input) data, so that the back-end system 110 verifies the OT-CVV. The OT-CVV may include a few digits, like e.g. XXX in which, from the left to the right, a first X is a digit for the hundreds, a second X is a digit for the tens and a third X is a digit for the units of a number.

The invention application allows generating, besides the OT-PAN, for the transaction, preferably an associated One-Time ED (or OT-ED), as a piece of restricted use information and a restricted use expiration, like e.g. a date and a time, that is determined by using a predetermined (use) expiration generation algorithm, as a third algorithm. The third algorithm is shared between the SE 12 and the second server 112, as an OT-ED verifier. The third algorithm may be e.g. a function of an addition of a predetermined time period, like e.g. a few minutes and/or a few hours, to a date and a time at which the invention application is activated and/or launched. The OT-ED may include a few digits, like e.g. mm/hh/dd in which, from the left to the right, a first m is a digit for the tens of minutes for a range from 0 to 6, a second m is a digit for the units of minutes for a range from 0 to 9, a first h is a digit for the tens of hours for a range from 0 to 2, a second h is a digit for the units of hours for a range from 0 to 9, a first d is a digit for the tens of days for a range from 0 to 3 and a second d is a digit for the units of days for a range from 0 to 9.

The restricted use expiration allows defining a time limit (e.g. date and time) until which the associated restricted use account number is valid. Once the restricted use expiration is reached, the associated (first and second) restricted use account number is no more valid to perform a transaction, i.e. a corresponding transaction is declined by the SE 12 and/or the back-end system 110. The restricted use expiration is preferably to be submitted to the back-end system 110 that uses the same third algorithm and/or the same (input) data, so that the back-end system 110 verifies the restricted use expiration.

The memory 124 stores the payment transaction key and possibly other payment transaction keys. The (or each) payment transaction key may be restricted in use, like e.g. in time or a certain count of use, like for the restricted use account number and (an)other restricted use information piece(s), such as the OT-CVV and/or the OT-ED, or permanent. The payment transaction key may be a single use key or a so-termed limited use key.

The memory 124 stores the predetermined payment transaction algorithm including preferably a cryptography algorithm, like e.g. a 3 Data Encryption Standard (or DES) type algorithm, as the first algorithm.

The memory 124 stores an Application Transaction Counter (or ATC), as a counter. As known per se, an ATC value is incremented at each transaction and therefore changes for each new transaction, i.e. from a first to a second transaction.

The memory 124 may store other data to be used as input data to the predetermined payment transaction algorithm, like e.g. a DPAN, and/or other card data.

As input data to the predetermined payment transaction algorithm, there may be a PIN and/or other user authentication data, like e.g. a fingerprint(s), an iris print(s) and/or a voice print(s), as user authentication data, to be entered or submitted by the SE user, so as to further secure a transaction. Corresponding reference user authentication data is preferably only stored at a back-end system 110 side (and not at the client side), so as to further increase the transaction security level.

According to an essential feature of the invention, the invention application uses the ARQC, as a (payment transaction) cryptogram, and a Bank Identification Number (or BIN) or an Issuer Identification Number (or IIN), as a bank issuer identifier, so as to generate an OT-PAN, as a first restricted use account number. The first restricted use account number is to be submitted from the client side to the back-end system 110 that uses the same algorithm for generating a restricted use account number to be matched, as a second restricted use account number, and/or the same data.

The first restricted use account number allows transferring to the back-end system 110 a predetermined number of one or several information units of the ARQC, as a reduced cryptogram, as further explained in relation with figure 2.

The SE 12 or the user 11 (by using the phone MMI or a POS terminal (not represented) MMI) may be able to send one or several pieces of transaction information, like e.g. a transaction amount, a transaction currency and/or other transaction data.

The SE 12 or a user 11 terminal (by using the phone MMI or a POS terminal (not represented) MMI) is arranged to send a message including one or several user account information pieces, like e.g. a card type, such as EMV (or the like), a name, like e.g. a cardholder name, along with an OT-PAN, as a first restricted user account number. Part of data contained in the message may be provided by the SE user 11. The message may further include the OT-CVV, as a first piece of restricted use information, the OT-ED, as a second piece of restricted use information and/or other data, so as to further increase the transaction security level.

A corresponding payment transaction transfer channel to the back-end system 110 may pass, through possibly the user 11, possibly a merchant terminal (not represented), the first server 18, the acquirer infrastructure 100 and the back-end system 110.

The first server 18, as a merchant server (or the like), is connected, over a wire or wireless link 17, to the network 16.

The first server 18 is hosted by a computer with data processing means, data storing means and one or several I/O interfaces.

The first server 18 manages a set of one or several products and/or services that the first server 18 offers through (electronic) (payment) transactions.

The first server 18 stores or accesses a memory that contains a database including a transaction amount, a transaction currency and/or other transaction data that is associated with each product or service that is thus offered.

The first server 18 is able to receive a message including one or several products and/or one or several services that the user 11 desires to buy (or rent).

The first server 18 is able to determine a transaction amount and/or other transaction data that is associated with the product(s) and/or service(s) that the user 11 desires.

The first server 18 is able to provide the user 11 and/or the SE 12 with the determined transaction data, so as to perform a corresponding transaction.

The first server 18 is able to receive a message originating from the client device side, like e.g. the SE 12, the phone 14 and/or a POS terminal, and that includes one or several pieces of user account information, the first restricted use account number and/or other data, like e.g. the OT-ED and/or the OT-CVV. The received message may further include a transaction amount, a transaction currency and/or other transaction data that relate(s) to a product(s) and/or a service(s) that the user 11 requests to buy (or rent).

The first server 18 does not interpret the piece(s) of user account information, the first restricted use account number and/or other data, like e.g. the OT-ED and/or the OT-CVV, that are contained within the received message and that relate to the bank user account.

The first server 18 plays a role of an intermediary entity between the client device, and the back-end system 110 (through the acquirer infrastructure 100).

The first server 18 is able to send to the back-end system 110 a message that includes a request for authorizing a transaction along with one or several pieces of user account information, the first restricted use account number, and possibly other data, like e.g. one or several transaction information pieces.

The first server 18 is able to send to the SE 12 a message that includes, as response request, an authorization or a refusal of the requested transaction and that originates, through the acquirer infrastructure 100, from the back-end system 110 side.

The first server 18 is connected, over a wire or wireless link 19, to the acquirer infrastructure 100.

The acquirer infrastructure 100 allows identifying the back-end system 110 that is associated with an identifier of a (bank) issuer to be received from the client device side.

The acquirer infrastructure 100 allows routing data that originates from the client device side to the concerned identified back-end system 110.

The acquirer infrastructure 100 is connected to one or several issuer infrastructures, as back-end systems. Each back-end system is preferably operated by an associated bank operator(s) or on its(their) behalf.

The acquirer infrastructure 100 accesses a first database stored in a memory (not represented) that is either present within or connected to the acquirer infrastructure 100.

The first database may include a first correspondence table. The first correspondence table includes, for one or several identifiers, like e.g. a BIN or an IIN, as a (bank) issuer identifier, and an identifier(s), such as e.g. a URI and/or a URL, relating to a back-end system 110 to be addressed for a transaction in progress (and to be processed by the concerned back-end system 110).

The back-end system 110 stores or accesses a second database stored in a memory (not represented) that is either present within or connected to the back-end system 110.

The second database may include a second correspondence table. The second correspondence table includes, as a mapping table, a set of DPANs, as tokens, and their corresponding associated PANs and, for each user account, other associated card data, such as e.g. a CVV, an ED, an ATC and/or other data item(s) that changes its(their) value for each new transaction, and/or a payment transaction key(s).

The second server 112 is arranged to determine or retrieve, based on like e.g. a card type, a cardholder name, as one or several pieces of user account information, an ATC and/or other data item(s) that changes its(their) value for each new transaction and/or a payment transaction key(s).

The back-end system 110 is arranged to determine or retrieve, based on like e.g. a card type, a cardholder name and/or a DPAN, as one or several pieces of user account information to be received, a PAN, as one or several pieces of user account information, that are associated with the user (bank) account.

The back-end system 110 includes the second server 112.

Instead of exchanging with the second server 112, the first server 18 may carry out the functions carried out by the second server 112 that is described infra.

The second server 112 manages, among a plurality of user bank accounts, a bank account relating to the user 11.

The second server 112 is hosted by a computer with data processing means, such as a processor(s) (not represented), data storing means, like e.g. a memory(ies) (not represented), and one or several I/O interfaces.

The second server 112 is arranged to receive a message including a request for authorizing a transaction along with e.g. a card type and/or a card holder name, as one or several pieces of user account information, possibly one or several pieces of transaction information and an OT-PAN 1, as a first restricted use account number.

The server memory stores a predetermined payment transaction algorithm including preferably a cryptography algorithm, like e.g. a 3 DES type algorithm, as a first algorithm, that is shared with the SE 12, as the client device.

The server memory stores, for each user bank account, data to be used as input data to the predetermined payment transaction algorithm, a payment transaction key(s), an ATC, as one data item (possibly accompanied with other data item(s)), and/or possibly other card data, like e.g.a DPAN, a CVV and/or an ED.

The server memory stores preferably reference user authentication data, like e.g. an on-line PIN and/or biometric data relating to the concerned authorized user, (and/or reference user credentials, like e.g. a password) to be entered or submitted by the user at the client side. Alternatively, instead of storing the reference user authentication data (and/or the reference user credentials), the second server 112 accesses it (or them) at the back-end system 110.

The server processor processes, controls and communicates internally data with all the other components incorporated within the second server 112 and, through the server I/O interface(s), with the second server 112 exterior.

The server processor executes or runs several applications.

Among the applications supported by the second server 112, the server memory stores an invention (payment transaction) verification application that uses possibly one or several transaction information pieces to be received, a predetermined payment transaction key, an ATC, as one data item (possibly with other data item(s)), and other data stored at the back-end system 110 side for the concerned user bank account, as input data to the predetermined (payment transaction) verification algorithm.

According to a preferred embodiment, the predetermined (payment transaction) verification algorithm includes one or several cryptography algorithms relating to e.g. an EMV (or the like) type application, as the first algorithm that is shared with the SE 12. The first algorithm allows generating a reference ARQC, as a reference payment transaction cryptogram and a kind of (digital) signature of the concerned transaction. The verification algorithm allows generating, based notably on a reduced ARQC, according to an essential invention feature, a reference OT-PAN, as a second restricted account number to be matched.

The invention verification algorithm that allows generating the reference OT-PAN is explained in more details explained in relation with figure 2.

The invention verification application may be protected by reference user authentication data, like e.g. an on-line PIN and/or biometric data, like e.g. a fingerprint(s), an iris print(s) and/or a voice print(s), relating to the concerned authorized user (and/or reference user credentials, like e.g. a password), to be entered or submitted by the user at the client side. The reference user authentication data and/or the reference user credentials is(are) verified by the second server 112 either directly or indirectly, i.e. through a verification of a presence of a reference restricted use account number to be matched.

According to a first embodiment, as a direct user authentication technique, the second server 112 compares the reference user authentication data (and/or the reference user credentials) to user authentication data to be received (and/or user credentials to be received respectively). In case of a discrepancy between the reference user authentication data (and/or the reference user credentials) and received user authentication data (and/or received user credentials respectively), the second server 112 does not authenticate the concerned user 11 and thus aborts a further execution of a transaction authorization process. Otherwise, i.e. if the reference user authentication data (and/or the reference user credentials) matches received user authentication data (and/or received user credentials), the second server 12 authenticates successfully the concerned user 11 and allows further executing a transaction authorization process.

According to a second embodiment, as an indirect user authentication technique, the second server 112 is arranged to compare a (generated) second restricted use account number to a first restricted use account number to be received. The second restricted use account number is generated by using the reference user authentication data (and/or the reference user credentials). The first restricted use account number is generated by using entered or submitted user authentication data at the client side (and/or user credentials respectively). If the received first restricted use account number does not match the second restricted use account number, then the second server 112 does not authorize a further execution of a transaction authorization process due to a discrepancy between the reference user authentication data (and/or the reference user credentials) and received user authentication data (and/or received user credentials respectively). Otherwise, i.e. only in case of an identical matching between the first and the second restricted use account number, the second server 112 authenticates successfully, i.e. through a computation of the second restricted use account number and its reception, the concerned user 11 and authorizes a further execution of a transaction authorization process.

The invention verification application supported at the back-end system 110 side may allow generating, besides the reference OT-PAN, an associated reference OT-CVV, as a reference of a first piece of restricted use information and a reference security code, by using a predetermined security code generation algorithm that is shared with the client device. The reference OT-CVV allows further securing the use of the corresponding reference restricted use account number. The OT-CVV is to be sent to the back-end system 110 that uses the same second algorithm and/or the same data, so that the back-end system 110 verifies a received OT-CVV.

The second server 112 may be arranged to compare the reference OT-CVV, as a reference security code, (that is generated at the second server 112 side) to an OT-CVV to be received, as a security code. In case of a discrepancy between the reference security code and a received security code (that is generated at the SE 12 side), the second server 112 does not authenticate the concerned SE 12 and thus aborts a further execution of a transaction authorization process. Otherwise, i.e. if the reference of the first piece of restricted use information matches the received first piece of restricted use information, the second server 12 authenticates successfully the concerned SE 12 and allows further executing a transaction authorization process. The execution of the transaction authorization process may continue by a retrieval of one or several pieces of user account information, like e.g. a PAN, a CVV, based on one or several pieces of user account information, like e.g. a card type, a card holder name and an OT-CVV, to be received from the client side.

The invention verification application may allow generating, besides the reference OT-PAN, for a transaction, an associated reference OT-ED, as a reference of a second piece of restricted use information or a reference of a restricted use expiration, like e.g. a date and a time, that is determined by using a predetermined (use) expiration generation algorithm, as a third algorithm. The third algorithm is shared between the SE 12, as client device, and the second server 112.

The second server 112 may be arranged to compare the reference restricted use expiration (that is generated at the second server 112 side) to a restricted use expiration to be received. In case of a discrepancy between the reference restricted use expiration and a received restricted use expiration (that is generated at the SE 12 side), the second server 112 does not authenticate the concerned client device and thus aborts a further execution of a transaction authorization process. Otherwise, i.e. if the reference restricted use expiration matches the received restricted use expiration, the second server 12 authenticates successfully the concerned client device and allows further executing a transaction authorization process. The execution of the transaction authorization process may continue by a retrieval of one or several pieces of user account information, like e.g. a PAN, an ED, based on one or several pieces of user account information, like e.g. a card type, a card holder name and an OT-ED, to be received from the client side.

The second server 112 is arranged to retrieve or let retrieve (at the back-end system 110 side), only if the second restricted use account number matches the first restricted use number, based on one or several received pieces of user account information, like e.g. a DPAN, one or several pieces of user account information, like e.g. a PAN and possibly other card data.

The second server 112 is arranged to send or let send (by another server included (not represented) within or connected to the back-end system 110), as a response to a received authorization request, either an authorization or a refusal for performing a corresponding payment transaction.

Figure 2 is an exemplary embodiment of an algorithm 20 for generating an OT-PAN, both at the client side, as a first restricted use account number OT-PAN 1, and, at the back-end system 110 side, as a second restricted use account number OT-PAN 2.

The restricted use account number generation algorithm 20 includes an algorithm 22 for generating an ARQC, an algorithm 24 for reducing the generated ARQC and an algorithm 26 for determining an OT-PAN based on a reduced ARQC and a bank issuer identifier.

The algorithm 22 for generating a cryptogram, as the first (predetermined) algorithm, includes a cryptography algorithm, like e.g. a 3 DES.

Such a cryptogram generation algorithm 22 has, as a first input, a (payment transaction) key 21 and, as a second input(s), an ATC, as a predetermined data item 23 and/or (an)other data item(s). The value of each of the ATC and/or (an)other data item(s) changes from a transaction to another transaction. Such a cryptogram generation algorithm 22 may have a transaction amount and/or other transaction data, as (an)other input(s). The transaction data is obtained from or through the first server 18. The payment transaction key 21 and the ATC 23, as a data item and/or (an)other data item(s) that change(s) its(their respective) value from a transaction to another transaction, are stored, as pieces of the user account information, at the client side (by the SE memory 124 (and/or by a phone memory)) and at the back-end system 110 side.

The cryptogram generation algorithm 22 may have, as another input(s), other data 25, such as e.g. a DPAN, as a token, and/or other card data. The card data may be informed by the user 11 and/or provided by e.g. the SE 12 (or the phone 14) at the client side or the back-end system 110, like e.g. the second server 112.

The DPAN (or the token) may be remotely provided to the SE 12, through or by a remote server, like e.g. the second server 112, as a TSP. The DPAN (or the token) is associated with a corresponding (funding) PAN or (an)other user account number(s).

The cryptogram generation algorithm 22 may have, as another input(s), other security data, like e.g. an OT-CVV, as a first piece of restricted use information, and/or an OT-ED, as a second piece of restricted use information, that are generated by the SE 12 (and possibly informed by the user 11 at the client side) and sent, through the first server 18, to the back-end system 110. The first piece of restricted use information and/or the second piece of restricted use information is or are added, so as to increase a security level of a corresponding transaction. The first piece of restricted use information (and/or the second piece of restricted use information) may be also generated at the back-end system 110 by using one and the same second algorithm (and/or the third piece of restricted use information respectively) and/or the same predetermined (input) data.

The cryptogram generation algorithm 22 may have, as an additional input(s), other data 25, like e.g. an on-line PIN (and/or biometric data), as user authentication data, to be entered or submitted by the user 11 at the client side and a reference on-line PIN, as reference user authentication data stored at the back-end system 110 side. The reference on-line PIN is preferably only stored, as data relating to the bank user account, at the back-end system 110 side, i.e. without being stored at the client side.

The cryptogram generation algorithm 22 allows generating an ARQC 27, as a transaction cryptogram, by using preferably one or several pieces of transaction data. The ARQC 27 includes a predetermined number N of digits (as an hexadecimal number(s)) (or (an)other information unit(s), like e.g. bit(s) or byte(s)), as a first length value, like e.g. 8 bytes. The predetermined number N of digits is typically 17 and is included within a first range from 16 to 19.

The ARQC reduction algorithm 24 allows reducing the generated ARQC 27, as input data, by using a predetermined reduction scheme. The predetermined reduction scheme allows selecting or extracting a predetermined number M of digits (as an hexadecimal number) (or another information unit(s), like e.g. bit(s) or byte(s)) of the ARQC 27.

The predetermined reduction scheme may be one or several least (or the most) significant information units, like e.g. the 9 least significant digits, of the transaction cryptogram.

The ARQC reduction algorithm 24 allows generating a reduced ARQC 29, as a reduced (transaction) cryptogram of the ARQC 27. A resulting reduced ARQC 29 is thus formed or constituted by one or several extracted information units of the ARQC. The reduced ARQC 29 has a second length value, like e.g. 4 bytes or 9 digits. The predetermined number M of digits is typically 9 and is included within a second range from 9 to 12.

The algorithm 26 for determining an OT-PAN allows generating an OT-PAN 215 by using a predetermined concatenation algorithm (and/or a predetermined information unit mixing algorithm) and the reduced ARQC 29, as a first input, and a BIN 211 (or IIN), as a bank issuer identifier and a second input. The bank issuer identifier has a third length value, like e.g. 6 digits. The concatenation algorithm (and/or the information unit mixing algorithm) is(are) shared between the SE 12 and the second server 112 (or another entity included within or connected to the back-end system 110).

The OT-PAN may be completed by (an)other input(s) (not represented), like e.g. one or several checksum information units. The resulting OT-PAN includes thus the other input(s), like e.g. 1 digit for a Luhn type algorithm result with the OT-PAN, as token and input data to a predetermined checksum algorithm, that is(are) concatenated to the OT-PAN. The checksum algorithm is shared between the client device and the second server 112 (or another entity included within or connected to the back-end system 110). The checksum algorithm uses, as input, the OT-PAN, namely the reduced ARQC and the BIN.

The checksum information unit(s) that is(are) included in a received OT-PAN is(are) firstly extracted, so as to allow the back-end system 110 to validate the integrity of the other information unit(s) received within the received OT-PAN.

A generation of the OT-PAN allows authorizing, only if successfully recognized, i.e. verified, at the back-end system 110 side, a payment transaction while securing this latter.

Figure 3 depicts an exemplary embodiment of a message flow 30 that involves the user 11, the SE 12, the phone 14, the first server 18 and the second server 112.

In the explained example, it is assumed that the client device is the SE 12.

It is further assumed that the first server 18 relays data that is generated by the client device and sent from the client device side to the first server 18.

It is also assumed that the second server 112 plays a role of a verifier of any data, at least an OT-PAN, that is generated by the client device.

It is assumed that the phone 14 is currently under a radio coverage of the network 16 and a payment transaction process is triggered by the SE 12 under a user 11 control (e.g. the user 11 launches the invention payment transaction application supported by the SE 12).

However, the invention is still applicable if the payment transaction process is triggered by the SE 12, the phone 14 or the first server 18.

The SE 12 sends to the phone 14 a message 32, such as e.g. a proactive command "Display TEXT" or a push notification, for interacting with the user 11 accompanied with a message to be transmitted, through the phone MMI, to the user 11.

The phone 14 presents to the user 11 the transmitted message 33, such as e.g. "please enter a transaction amount" and optionally "please enter your PIN", that requests the user 11 to enter or submit a transaction amount, as transaction data, and optionally an on-line PIN (or the like), as user authentication data.

The user 11 sends, through the phone MMI, to the phone 14 a request response message 34 that includes possibly the transaction amount, as transaction data, and preferably her or his on-line PIN.

The phone 14 sends to the SE 12 a message 36 that includes the transaction data and the user authentication data entered, through the phone MMI, by the user 11.

The SE 12 generates (not represented) preferably an OT-CVV, as a first piece of restricted use information, by using the second algorithm and possibly some predetermined input data, like e.g. the CVV.

The SE 12 generates (not represented) preferably an OT-ED, as a second piece of restricted use information, by using the third algorithm. The on-board generated restricted use information pieces are valid for a limited time period, like e.g. 30 minutes or one hour.

The SE 12 generates 38 an OT-PAN 1 by using the ARQC generation algorithm, as the first algorithm, preferably the OT-CVV, preferably the OT-ED, preferably a DPAN, as a token, possibly a transaction and/or other transaction data, a payment transaction key (provided by the SE 12 that stores this latter), an ATC (and/or (an)other data item(s) the value of which change(s) from a transaction to another transaction), as card data, (provided by the SE 12 that stores this latter), a bank issuer identifier (provided by the SE 12 that stores this latter) and optionally the on-line PIN (provided by the user 11).

The generated OT-PAN 1, as a first restricted use account number, is formed by the following information units, e.g. the bank issuer identifier with a 6 digit length, and 9 least significant digits of the generated ARQC, as a reduced cryptogram with a 9 digit length.

The generated OT-PAN 1 may be completed by one or several checksum information units, like e.g. a Luhn type algorithm result with a 1 digit length.

The SE 12 sends to the first server 18 a message 39 including a card type, a card holder name, as one or several pieces of user account information, accompanied with the on-board generated data, namely the OT-PAN 1, preferably additionally the OT-CVV and/or preferably additionally the OT-ED. The data contained in the message 39 are provided automatically by the SE 12.

Alternatively, instead of the SE 12, a POS terminal (or a PC), as another device, sends to the first server 18 the message 39. Prior to sending the data included within the message 39, the user 11 provides data by using a POS terminal (or a PC) while e.g. tapping the phone 14 on the POS terminal or entering, once the SE 12 has provided the user 11 with at least the on-board generated data, manually, through a POS terminal (or a PC) MMI, on an on-line payment form, the following data, "Visa" (or the like), her or his "user name", the OT-PAN 1, preferably the OT-CVV, preferably the OT-ED, in corresponding data fields:
- Card Type;
- Name on Card;
- Card number;
- CVV; and
- ED.

The first server 18 sends, through the acquirer infrastructure, to the second server 112 (within the back-end system 110) a message 310 including a request for authorizing a transaction accompanied with the card holder name, as a piece(s) of user account information, and the SE 12 on-board generated data, namely at least the OT-PAN 1 and additionally preferably the OT-CVV and/or the OT-ED. The message 310 thus includes, besides an authorization request, data received from the client device side.

If the received message 310 further includes an OT-CVV, then the second server 112 (or another entity at the back-end system 110 side) may verify the received OT-CVV.

Prior to verifying any received data generated at the client side, the second server 112 retrieves, based on the card holder name, as at least part of the received user account information, one or several user account information pieces that are stored at the back-end system 110 side.

To verify the received OT-CVV, the second server 112 retrieves, based on the card holder name, as at least part of the received user account information, the associated second algorithm and possibly the same data that is or are used as input to the second algorithm by the client device.

Then, the second server 112 generates (not represented) a reference OT-CVV, as a reference of the first piece of restricted use information, by using the second algorithm and possibly the same data that is or are used as input to the second algorithm by the client device. The data is included within the received message 310 and/or provided by an entity included within the back-end system 110.

The second server 112 compares (not represented) the (received) OT-CVV to the (generated) reference OT-CVV.

If the received OT-CVV matches the reference OT-CVV, then the second server 112 authorizes to continue an execution of a transaction authorization process. Otherwise, i.e. if the received OT-CVV does not match the reference OT-CVV, the second server 112 refuses to continue an execution of a transaction authorization process.

If the received message 310 further includes an OT-ED, then the second server 112 (or another entity at the back-end system 110 side) may verify the received OT-ED.

To verify the received OT-ED, the second server 112 retrieves, based on the card holder name, as at least part of the received user account information, the associated third algorithm and possibly the same data that is or are used as input to the third algorithm by the client device.

Then, the second server 112 generates (not represented) a reference OT-ED, as a reference of the second piece of restricted use information, by using the third algorithm and possibly the same data that is or are used as input to the third algorithm by the client device. The data is included within the received message 310 and/or provided by an entity included within the back-end system 110.

The second server 112 compares (not represented) the (received) OT-ED to the (generated) reference OT-ED.

If the received OT-ED matches the reference OT-ED, then the second server 112 authorizes to continue an execution of a transaction authorization process. Otherwise, i.e. if the received OT-ED does not match the reference OT-ED, the second server 112 refuses to continue an execution of a transaction authorization process.

After, when applicable, a successful verification of the received OT-CVV and/or a successful verification of the received OT-ED, the second server 112 (or another entity included within the back-end system 110) will verify the received OT-PAN 1.

Optionally, if information units included within the received OT-PAN 1 contain one or several received checksum information units, as a part of the OT-PAN1, then the second server 112 verifies, after an extraction of the received checksum information unit(s), whether the received checksum information unit(s) do(es) or do(es) not match a result of the checksum algorithm with the OT-PAN 1, as input.

If the received checksum information unit(s) do(es) match a result of the checksum algorithm with the OT-PAN 1, as input, then the received OT-PAN 1 has not been corrupted. The second server 112 then verifies the received OT-PAN 1.

Otherwise, i.e. If the received checksum information unit(s) do(es) not match a result of the checksum algorithm with the OT-PAN 1, as input, the second server 112 refuses to continue an execution of a transaction authorization process since the OT-PAN 1 is corrupted.

To verify the received OT-PAN 1, the second server 112 retrieves a bank issuer identifier and, based on the card holder name, as at least part of the received user account information, the associated OT-PAN generation algorithm and possibly at least part of the same data that is or are used as input to the OT-PAN generation algorithm by the client device, namely the associated DPAN, the associated ATC, as a data item (and/or (an)other data item(s), the value(s) of which change(s) from a first to a second transaction, the associated payment transaction key and optionally the on-line PIN that is preferably only stored at the back-end system 110 side.

Then, the second server 112 (or another entity at the back-end system 110 side) generates 312 an OT-PAN 2, as a second restricted use account number to be matched. To generate the OT-PAN 2, the second server 112 uses the OT-PAN generation algorithm and data that are used by the client device to generate the OT-PAN 1.

More exactly, the second server 112 uses, as data to be used as input data for generating the OT-PAN 2, preferably the received OT-CVV, preferably the received OT-ED, as at least part of the received piece(s) of user account information and a payment transaction key and an ATC, as at least part of the retrieved data item (and/or (an)other data item(s) at the back-end system 110 side.

The retrieved data includes card data, like e.g. the bank issuer identifier, possibly the DPAN, the ATC (and/or (an)other data item(s), the value(s) of which change(s) from a first to a second transaction), the payment transaction key and optionally the reference on-line PIN.

The card data is or are retrieved from an entity included within the back-end system 110 based on the card holder name, as at least part of the received piece(s) of user account information.

Then, the second server 112 compares 314 the (received) OT-PAN 1 to the (generated) OT-PAN 2.

If the OT-PAN 1 does not match the OT-PAN 2, then a corresponding payment transaction is considered as being not valid 316. Thus, the second server 112 or another entity (that may be included within or connected to the back-end system 110) sends (not represented), through the acquirer infrastructure, to the first server 18 a corresponding transaction refusal, as a response to the received request 310.

Otherwise, i.e. if the OT-PAN 1 matches the OT-PAN 2, a corresponding payment transaction is considered as being valid 318. Then, if a DPAN, as a token, has been used, then the second server 112 or another entity (that may be included within or connected to the back-end system 110) retrieves, based on the card holder name, as at least part of the received user account information, a PAN and/or other piece(s) of user account information, like e.g. a CVV and/or an ED.

The second server 112 or another entity (that may be included within or connected to the back-end system 110) sends to an authorization server (not represented) a transaction authorization request.

The authorization server sends (not represented), through the acquirer infrastructure, to the first server 18 a corresponding transaction authorization, as a response to the received request 310. The payment transaction is thus completed.

The invention solution allows securing a payment transaction.

The invention solution does not need to involve a client device user, except for submitting transaction data and possibly user authentication data, when applicable (i.e. when these data are to be entered manually).

The invention solution is compatible notably with the existing merchant or retailer server.

Such an invention authorization method allows re-using an existing back-end system infrastructure reducing thus a technical complexity and corresponding costs to offer a transaction authorization service.

The embodiment that has just been described is not intended to limit the scope of the concerned invention. Other embodiments may be given. As another embodiment example, instead of two servers 18 and 112 that are involved, only one server allows authorizing (or not) a transaction. As still another embodiment example, instead of the SE 12 and the phone 14 that are involved, only the SE 12 or the phone 14 allows issuing on-board generated data to be, at least in part, successfully verified at the server side, so as to continue an execution of a transaction authorization process.

## Claims

1. A method (30) for authorizing a transaction,
**characterized in that** the method comprises the following steps:
- a device generates a transaction cryptogram by using a first predetermined algorithm, at least one payment transaction key and at least one predetermined data item, a value of at least one of the at least one predetermined data item changing from a first to a second transaction;
- the device extracts, from the transaction cryptogram, by using a predetermined reduction scheme, a predetermined number of at least one unit of information, the at least one extracted information unit forming a reduced cryptogram;
- the device generates (38) a first restricted use account number based upon at least the reduced cryptogram and a bank issuer identifier;
- the device or another device sends to a first server a first message (39) including at least one piece of user account information accompanied with the first restricted use account number;
- the first server sends to a back-end system a second message (310) including a request for authorizing a transaction accompanied with the at least one piece of user account information and the first restricted use account number;
- the back-end system retrieves, based upon at least part of the at least one piece of user account information, at least one piece of user account information;
- the back-end system generates (312) a second restricted use account number by using the first predetermined algorithm and the predetermined reduction scheme, the bank issuer identifier and at least part of the at least one retrieved piece of user account information;
- the back-end system compares (314) the second restricted use account number to the first restricted use account number;
- only if the second restricted use account number matches the first restricted use account number, the back-end system retrieves, based upon at least part of the at least one retrieved piece of user account information, at least one piece of user account information; and
- the back-end system or another entity sends to the first server a third message including, as request response, a transaction authorization.

2. Method according to claim 1, wherein the generated first restricted use account number includes at least one checksum information unit.

3. Method according to claim 1 or 2, wherein, the transaction cryptogram including a predetermined number N of digits, the reduced cryptogram including a predetermined number M of digits, the predetermined number N is included within a first range from 16 to 19 while the predetermined number M is included within a second range from 9 to 12.

4. Method according to any of claims 1 to 3, wherein the at least one of the at least one predetermined data item (23) includes a counter.

5. Method according to any of claims 1 to 4, wherein the device generates the first restricted use account number by further using submitted user authentication data and the back-end system generates the second restricted use account number by further using reference user authentication data stored at the back-end system side.

6. Method according to any of claim 1 to 5, wherein the device generates at least one first piece of restricted use information by using a second algorithm, the first message further includes the at least one first piece of restricted use information, the second message further includes the at least one first piece of restricted use information, the back-end system generates at least one reference of a first piece of restricted use information by using the second algorithm, the back-end system compares the at least one reference of the first piece of restricted use information to the at least one first piece of restricted use information and, only if the at least one reference of the first piece of restricted use information matches the at least one first piece of restricted use information, the back-end system authorizes to continue a transaction authorization process.

7. Method according to any of claim 1 to 5, wherein the device generates at least one first piece of restricted use information by using a second algorithm, the first message further includes the at least one first piece of restricted use information, the second message further includes the at least one first piece of restricted use information, the back-end system generates at least one reference of a first piece of restricted use information by using the second algorithm, and the back-end system generates the second restricted use account number by further using the at least one reference of the first piece of restricted use information.

8. Method according to claim 6 or 7, wherein the at least one first piece of restricted use information includes at least one element of a group comprising:
- a restricted use security code; and
- a restricted use expiration.

9. A device (12) for authorizing a transaction,
**characterized in that** the device is configured to:
- generate a transaction cryptogram by using a first predetermined algorithm, a payment transaction key and at least one predetermined data item, a value of at least one of the at least one predetermined data item changing from a first to a second transaction;
- extract, from the transaction cryptogram, by using a predetermined reduction scheme, a predetermined number M of at least one unit of information, the at least one extracted information unit forming a reduced cryptogram;
- generate a first restricted use account number based upon at least the reduced cryptogram and a bank issuer identifier;
- send a first message including at least one piece of user account information accompanied with the first restricted use account number.

10. A back-end system (110) for authorizing a transaction,
**characterized in that** the back-end system is configured to:
- receive a second message including a request for authorizing a transaction accompanied with at least one piece of user account information and a first restricted use account number;
- retrieve, based upon at least part of the at least one received piece of user account information, at least one piece of user account information;
- generate a second restricted use account number by using a first predetermined algorithm and a predetermined reduction scheme, a bank issuer identifier and at least part of the at least one retrieved piece of user account information;
- compare the second restricted use account number to the first restricted use account number;
- retrieve, only if the second restricted use account number matches the first restricted use account number, based upon at least part of the at least one retrieved piece of user account information, at least one piece of user account information;
- send a third message including, as request response, a transaction authorization.
